# EUROPEAN PATENT SPECIFICATION

(11) **EP 1 703 523 B1**
(45) Date of publication and mention of the grant of the patent: **23.09.2009**
(21) Application number: 06251222.3
(22) Date of filing: 08.03.2006
(51) Int. Cl.: G21C 3/07, G21C 11/00

(54) **Methods of reducing hydrogen absorption in zirconium alloys of nuclear fuel assembly**
Verfahren zur Reduktion von Wasserstoffabsorption bei Zirkoniumlegierungen eines Kernbrennstabbündels
Procédés de réduction de l'absorption d'hydrogène dans des alliages de zircone d'un ensemble à combustible nucléaire

(30) Priority: 14.03.2005 US 79356
(43) Date of publication of application: 20.09.2006
(73) Proprietor: GENERAL ELECTRIC COMPANY, Schenectady, NY 12345 (US)
(72) Inventor: Hettiarachchi, Samson, Menlo Park, CA 94025 (US); Lutz, Daniel Reese, San Jose, CA 95125 (US)
(74) Representative: Pedder, James Cuthbert

(56) References cited:
- EP-A- 0 692 792
- GB-A- 1 217 504
- US-A- 4 137 131
- US-A- 4 473 410
- US-A- 5 475 723

## Description

This invention relates generally to nuclear reactors, and more particularly, to zirconium alloy nuclear fuel assemblies and methods to reduce hydrogen absorption in zirconium alloys.

A reactor pressure vessel (RPV) of a boiling water reactor (BWR) typically has a generally cylindrical shape and is closed at both ends, e.g., by a bottom head and a removable top head. A core assembly is contained within the RPV and includes the core support plate, fuel assemblies, control rod blades and a top guide. A core shroud typically surrounds the core assembly and is supported by a shroud support structure. Particularly, the shroud has a generally cylindrical shape and surrounds both the core plate and the top guide. There is a space or annulus located between the cylindrical reactor pressure vessel and the cylindrically shaped shroud.

The core of the reactor includes an array of fuel assemblies. The fuel assemblies include fuel rods, fuel spacers, fuel channels, and water rods that are typically formed from zirconium alloys. The service life of a boiling water reactor (BWR) fuel channel is generally limited by the ability of the channel to resist longitudinal bowing, creep and corrosion. Channels used in the nuclear energy industry are typically formed from zirconium alloys, for example, Zircaloy-2 and Zircaloy-4, which exhibit exceptional resistance to corrosion due to a natural formation of a dense, adherent and stable surface oxide. However, such zirconium alloys are susceptible to corrosion by reacting with high temperature steam and water that are used as the cooling and heat transfer media in the reactor. A by-product of the zirconium alloy corrosion reaction is hydrogen. The corrosion-induced hydrogen is absorbed into the zirconium alloy and forms a zirconium hydride which can induce brittleness and reduce the ductility of the zirconium alloy fuel assembly components. Another problem is that the corrosion-induced hydrogen that is absorbed into the zirconium alloy can cause bowing of the fuel channels which can interfere with the control rod action.

New zirconium-based alloys have been introduced that appear to improve hydrogen absorption characteristics, but there are no known zirconium-based alloys that prevent hydrogen absorption completely. U. S. Patent 5,475,723 to Marlowe describes that alloying the zirconium inner lining of barrier fuel cladding with palladium or platinum promotes hydrogen absorption. However, U. S. Patent 5,805,656 to Adamson describes adding platinum or palladium to the zirconium alloy that forms the outer layers of a fuel channel to serve as a catalyst favoring recombination of hydrogen and oxygen to reduce hydrogen levels in the coolant water of the reactor.

In one aspect of the invention, a method of reducing hydrogen absorption in fuel assembly components fabricated from zirconium alloys in a nuclear reactor is provided. The method includes depositing at least one noble metal selected from the group consisting of platinum, palladium, osmium, ruthenium, iridium, rhodium, and mixtures thereof, on at least one surface of the fuel assembly components. Depositing at least one noble metal includes exposing the zirconium alloy fuel assembly components, outside the nuclear reactor, to an aqueous solution including at least one compound containing the at least one noble metal, wherein each noble metal is present in the solution at about 5 ppb to 500 ppb.

In another aspect, not forming part of the invention, a method of manufacturing a fuel assembly for a nuclear reactor is provided. The fuel assembly includes a plurality of components formed from a zirconium alloy. The method includes exposing at least one zirconium alloy fuel assembly component, outside the nuclear reactor, to an aqueous solution at a temperature of about 50°C to about 320°C, the aqueous solution comprising at least one compound containing at least one noble metal, selected from the group consisting of platinum, palladium, osmium, ruthenium, iridium, rhodium, and mixtures thereof.

The invention will now be described in greater detail, by way of example, with reference to the drawings, in which:-
Figure 1 is a sectional schematic illustration, with parts cut away, of a boiling water nuclear reactor pressure vessel.
Figure 2 is a perspective schematic illustration of a fuel channel shown in Figure 1.
Figure 3 is a graph of corrosion weight gain versus exposure time.
Figure 4 is a graph of hydrogen content versus exposure time.
Figure 5 is a graph of percent hydrogen pickup versus time.

A method of reducing the rate of corrosion-induced hydrogen absorption in zirconium (Zr) based nuclear fuel assembly components exposed to high temperature water and steam is described below in detail. The method includes depositing noble metal(s) on the outer surface of the Zr-based fuel assembly components in an out-of-reactor liquid coating process. The noble metal(s) is deposited on the components in a range of about 0.01 µg/cm² to about 1000 µg/cm². The noble metal deposits decrease the rate of hydrogen absorption into the Zr-based fuel assembly components which prevents an increase in brittleness of the zirconium alloy fuel assembly components, thereby extending the operational lifetimes of the fuel assembly components. The term "noble metal" as used herein means the platinum group metals, platinum, palladium, osmium, ruthenium, iridium, rhodium and mixtures thereof.

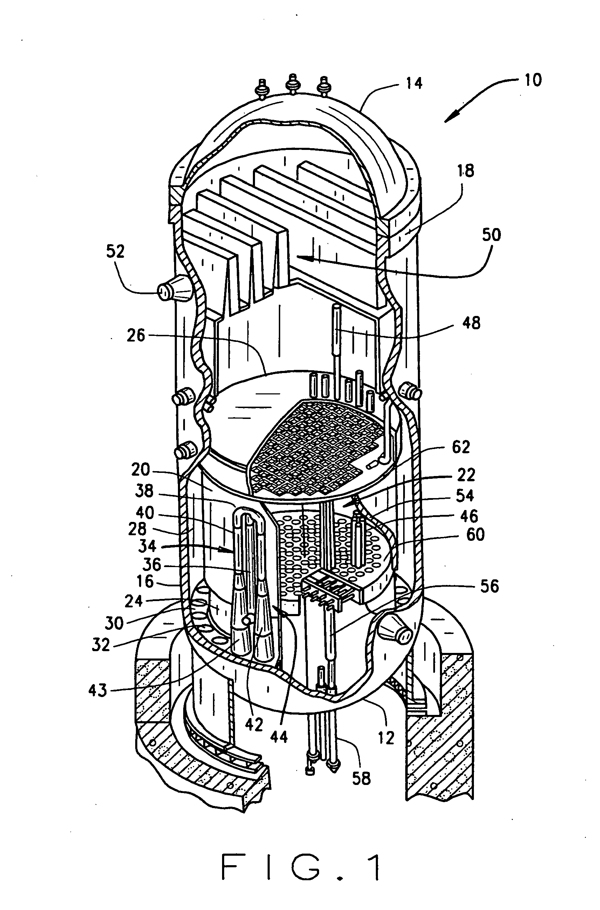

Referring to the drawings, Figure 1 is a sectional view, with parts cut away, of a boiling water nuclear reactor pressure vessel (RPV) 10. RPV 10 has a generally cylindrical shape and is closed at one end by a bottom head 12 and at its other end by a removable top head 14. A side-wall 16 extends from bottom head 12 to top head 14. Side-wall 16 includes a top flange 18. Top head 14 is attached to top flange 18. A cylindrically shaped core shroud 20 surrounds a reactor core 22. Shroud 20 is supported at one end by a shroud support 24 and includes a removable shroud head 26 at the other end. An annulus 28 is formed between shroud 20 and side-wall 16. A pump deck 30, which has a ring shape, extends between shroud support 24 and RPV side-wall 16. Pump deck 30 includes a plurality of circular openings 32, with each opening housing a jet pump 34. Jet pumps 34 are circumferentially distributed around core shroud 20. An inlet riser pipe 36 is coupled to two jet pumps 34 by a transition assembly 38. Each jet pump 34 includes an inlet mixer 40, a diffuser 42, and a tailpipe assembly 43. Inlet riser 36 and two connected jet pumps 34 form a jet pump assembly 44.

Thermal power is generated within core 22, which includes fuel assemblies 46 of fissionable material. Water circulated up through core 22 is at least partially converted to steam. Steam separators 48 separates steam from water, which is recirculated. Residual water is removed from the steam by steam dryers 50. The steam exits RPV 10 through a steam outlet 52 near vessel top head 14.

The amount of thermal power generated in core 22 is regulated by inserting and withdrawing control rods 54 of neutron absorbing material, such as for example, boron carbide. To the extent that control rod 54 is inserted into core 22 between fuel assemblies 46, it absorbs neutrons that would otherwise be available to promote the chain reaction which generates thermal power in core 22. Control rod guide tubes 56 maintain the vertical motion of control rods 54 during insertion and withdrawal. Control rod drives 58 effect the insertion and withdrawal of control rods 54. Control rod drives 58 extend through bottom head 12.

Fuel assemblies 46 are aligned by a core plate 60 located at the base of core 22. A top guide 62 aligns fuel bundles 46 as they are lowered into core 22. Core plate 60 and top guide 62 are supported by core shroud 20.

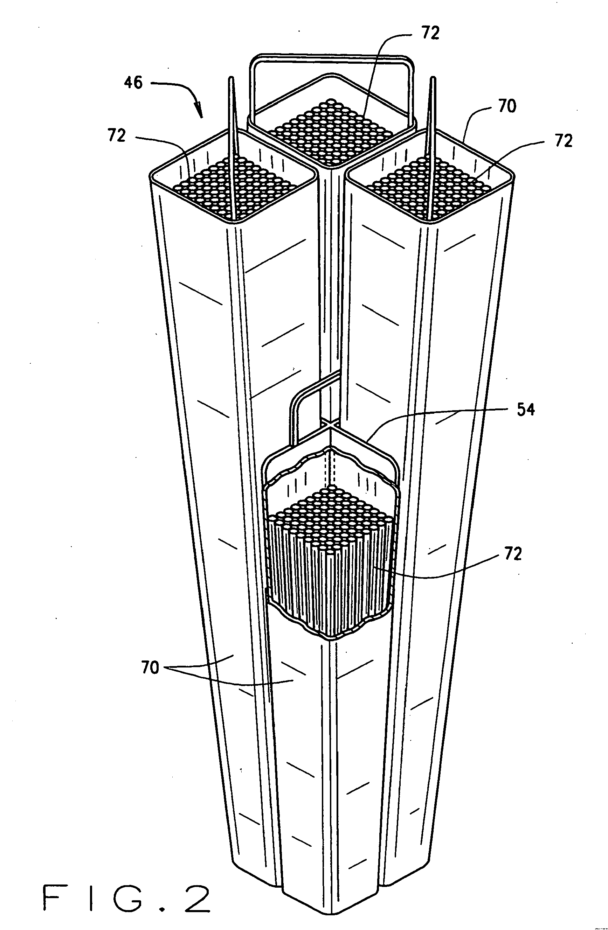

Figure 2 is a perspective schematic illustration of one fuel assembly 46. Fuel assembly 46 includes fuel channels 70 containing bundles of fuel rods 72, with X-shaped control rods 15 between adjacent channels 70. Fuel channels 70 are formed from an alloy having a low absorption cross section to thermal neutrons, so as to reduce the parasitic absorption of neutrons within the reactor core. For example, Zr-based alloys are used as the material for fuel channels, as well as other components employed within reactor cores, due to zirconium's low neutron absorption, adequate strength at reactor temperatures, and resistance to interaction with water in the reactor environment.

Fuel channels 70 are hollow elongated components having generally square-shaped cross-sections. Fuel channels 70 are formed, for example, by rolling strips of a Zr-based alloy, such as a Zircaloy alloy, bending the strips into U-shaped channel sections, and then seam welding two channel sections together to form a single fuel channel. Fuel channels 70 also serve to confine the coolant water flow through the core to a predictable flow path around the fuel rods 72. In a boiling water reactor, the coolant water is turned to steam by the heat released during fission. Accordingly, the fuel channels 70 are exposed to a hostile corrosive and radiation environment. In alternate embodiments, fuel channels 70 can have other shapes, for example, tubular.

To reduce the rate of corrosion-induced hydrogen absorption in Zr-based fuel assembly 46 components, for example, fuel channels 70, that are exposed to high temperature water and steam in reactor pressure vessel 10, the fuel assembly components are coated, in an exemplary embodiment, with at least one noble metal in an out-of-reactor process. The fuel assembly components are exposed to an aqueous solution that includes at least one noble metal containing compound at a temperature of about 50°C to about 320°C, and in another embodiment, from about 90°C to about 285°C. The fuel assembly components are exposed for a sufficient amount of time to permit the deposition of about 0.01 µg/cm² to about 1000 µg/cm², in another embodiment, from about 0.1 µg/cm² to about 100 µg/cm², in another embodiment, from about 0.1 µg/cm² to about 60 µg/cm², and in another embodiment from 1 µg/cm² to about 30 µg/cm².

The concentration of the noble metal compounds in the aqueous solution are such that the amount of noble metal in the solution is from about 5 ppb to about 500 ppb.

Suitable noble metal containing compounds include, but are not limited to, palladium acetyl acetonate, palladium nitrate, palladium acetate, platinum acetyl acetonate, hexahydroxyplatinic acid, Na₂Pt(OH)₆, Pt(NH₃)₄(NO₃)₂, K₃Ir(NO₂)₆, K₃Rh(NO₂)₆, platinum(IV) oxide (Pt(IV)O₂), platinum(IV) oxide-hydrate (Pt(IV)O₂.xH₂O, where x is 1-10), rhodium(II) acetate (Rh(II)ac₂), Rh(III) nitrate (Rh(III)(NO₃)₃), rhodium(III) oxide (Rh(III)₂O₃), rhodium(III) oxide-hydrate (Rh(III)₂O₃.xH₂O, where x is 1-10), rhodium(II) phosphate (Rh(III)PO₄) and rhodium(III) sulphate (Rh(III)₂(SO₄)₃).

The invention will be further described by reference to the following example which is presented for the purpose of illustration only and are not intended to limit the scope of the invention.

### EXAMPLE

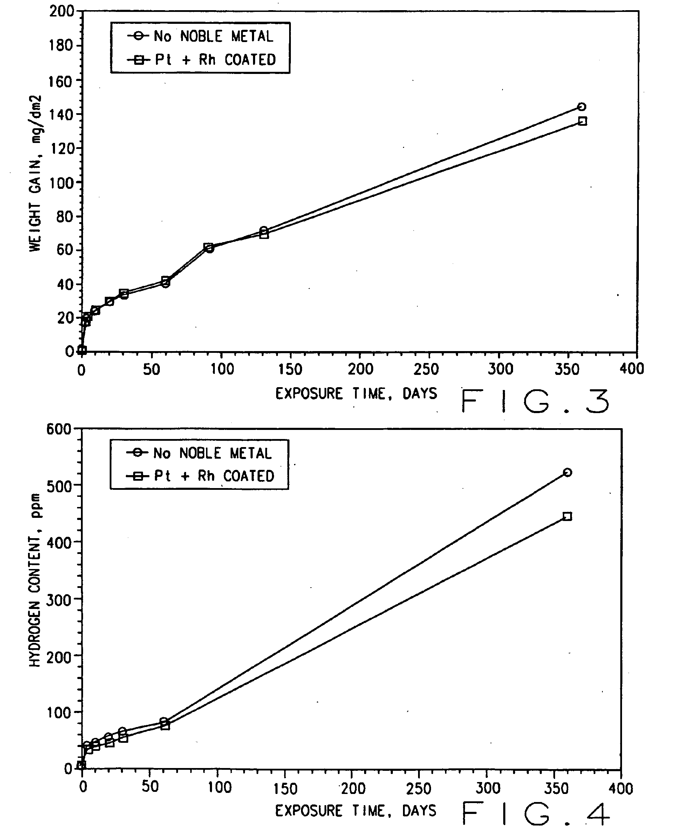

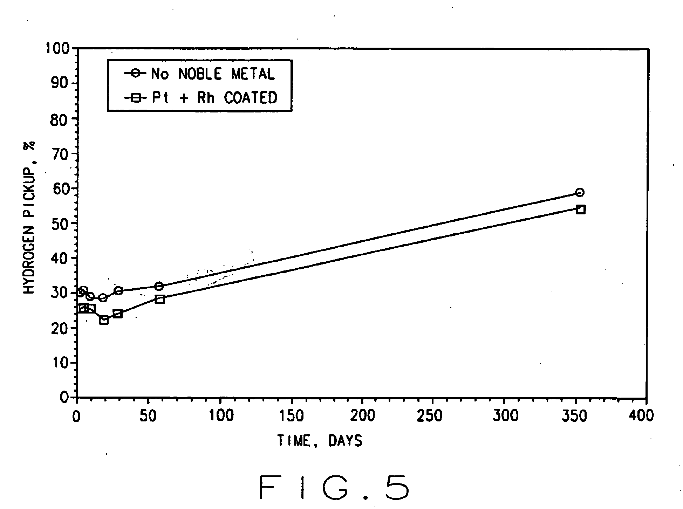

An unirradiated Zircaloy-2 tubing test sample was exposed for 48 hours to an aqueous solution containing 100 ppb Pt and 100 ppb Rh. The solution was maintained at 135°C. This coating procedure resulted in a coating containing approximately 7 µg/cm² Pt and 0.7 µg/cm² Rh. The coated test sample and an uncoated test sample were exposed to a 400°C steam corrosion test for 360 days. Corrosion weight gain data and hydrogen content data were obtained periodically between 3 and 360 days as shown in Figures 3 and 4, respectively. During this period, the corrosion weight gain of the noble metal coated sample was nearly the same or a little less than the uncoated sample. The hydrogen content of the noble metal coated sample was significantly less than that of the uncoated sample. By the end of the 360 day test the hydrogen content of the uncoated sample was 525 ppm while it was only 455 ppm for the coated sample. Because hydrogen is a product of the corrosion reaction and only a fraction of it is absorbed into the Zircaloy, a useful method of comparing hydrogen absorption kinetics of different samples is to calculate a hydrogen pickup (HPU) fraction. The HPU fraction normalizes the hydrogen contents of different samples relative to the amount of corrosion. In this manner differences in corrosion between samples are accounted for, thus allowing for a more direct measure of differences in hydrogen absorption kinetics. During the course of the test, the hydrogen pickup fraction of the coated sample was about 3-6% less than that of the uncoated sample (see Figure 5).

Treatment of zircaloy with noble metal lowers the hydrogen absorption into the zircaloy cladding. It is believed that the hydrogen absorption is lowered because of a recombination of hydrogen with oxygen on the catalytic zircaloy surface. In the above example, the total noble metal loading on the zircaloy surface is relatively low at 7.7 µg/cm². Higher noble metal loadings will provide greater catalytic activity, resulting in lower levels of hydrogen absorption by the cladding materials. By adjusting/optimizing the amount of noble metal on the Zircaloy cladding it is possible to further reduce the hydrogen pickup fraction.

## Claims

1. A method of reducing hydrogen absorption in fuel assembly (46) components fabricated from zirconium alloys in a nuclear reactor (10), said method comprising depositing at least one noble metal on at least one surface of the fuel assembly components outside of the nuclear reactor, wherein the depositing of the at least one noble metal comprises exposing zirconium alloy fuel assembly components to an aqueous solution comprising at least one compound containing the at least one noble metal, **characterised in that** the at least one noble metal is selected from the group consisting of platinum, palladium, osmium, ruthenium, iridium, rhodium, and mixtures thereof, and wherein each noble metal is present in the solution at about 5 ppb to about 500 ppb.

2. A method in accordance with Claim 1 wherein exposing zirconium alloy fuel assembly (46) components to an aqueous solution comprises exposing zirconium alloy fuel assembly components to the aqueous solution at about 50°C to about 320°C.

3. A method in accordance with Claim 1 wherein exposing zirconium alloy fuel assembly (46) components to an aqueous solution comprises exposing zirconium alloy fuel assembly components to the aqueous solution at about 90°C to about 285°C.

4. A method in accordance with Claim 1 wherein the at least one compound is selected from the group consisting of palladium acetyl acetonate, palladium nitrate, palladium acetate, platinum acetyl acetonate, hexahydroxyplatinic acid, Na₂Pt(OH)₆, Pt(NH₃)₄(NO₃)₂, K₃Ir(NO₂)₆, K₃Rh(NO₂)₆, platinum(IV) oxide, platinum(IV) oxide-hydrate, rhodium(II) acetate, Rh(IIIl) nitrate, rhodium(III) oxide, modium(III) oxide-hydrate, rhodium(II) phosphate, rhodium(III) sulphate, and mixtures thereof.

5. A method in accordance with Claim 1 wherein the noble metal is deposited in amount ranging from about 0.01 µg/cm² to about 1000 µg/cm².

6. A method in accordance with Claim 1 wherein the noble metal is deposited in amount ranging from about 1 µg/cm² to about 30 µg/cm²,

## Patentansprüche

1. Verfahren zum Verringern der Wasserstoffabsorption in aus Zirkoniumlegierungen hergestellten Brennelement(46)-Komponenten in einem Kernreaktor (10), wobei das Verfahren umfasst:
Abscheiden mindestens eines Edelmetalls auf mindestens einer Oberfläche der Brennelement-Komponenten außerhalb des Kernreaktors, wobei das Abscheiden des mindestens einen Edelmetalls das Aussetzen der Brennelement-Komponenten aus Zirkoniumlegierung gegenüber einer wässrigen Lösung umfasst, die mindestens eine Verbindung umfasst, die mindestens ein Edelmetall enthält, **dadurch gekennzeichnet, dass**
das mindestens eine Edelmetall ausgewählt ist aus der Gruppe, bestehend aus Platin, Palladium, Osmium, Ruthenium, Iridium, Rhodium und Mischungen davon und worin jedes Edelmetall in der Lösung zu etwa 5 ppb bis etwa 500 ppb vorhanden ist.

2. Verfahren nach Anspruch 1, worin das Aussetzen der Brennelement(46)-Komponenten aus Zirkoniumlegierung gegenüber einer wässrigen Lösung das Aussetzen der Brennelement-Komponenten aus Zirkoniumlegierung gegenüber der wässrigen Lösung bei etwa 50°C bis etwa 320°C umfasst.

3. Verfahren nach Anspruch 1, worin das Aussetzen der Brennelement(46)-Komponenten aus Zirkoniumlegierung gegenüber einer wässrigen Lösung das Aussetzen der Brennelement-Komponenten aus Zirkoniumlegierung gegenüber der wässrigen Lösung bei etwa 90°C bis etwa 285°C umfasst.

4. Verfahren nach Anspruch 1, worin die mindestens eine Verbindung ausgewählt ist aus der Gruppe bestehend aus Palladiumacetylacetonat, Palladiumnitrat, Palladiumacetat, Platinacetylacetonat, Hexahydroxyplatinsäure, Na₂Pt(OH)₆, Pt(NH₃)₄(NO₃)₂, K₃Ir(NO₂)₆, K₃Rh(NO₂)₆, Platin (IV) oxid, Platin(IV)oxid-hydrat, Rhodium(II)acetat, Rh(III)nitrat, Rhodium(III)oxid, Rhodium (III) oxid-hydrat, Rhodium(II)phosphat, Rhodium (II) sulfat und deren Mischungen.

5. Verfahren nach Anspruch 1, worin das Edelmetall in einer Menge im Bereich von etwa 0,01 µg/cm² bis etwa 1.000 µg/cm² abgeschieden wird.

6. Verfahren nach Anspruch 1, worin das Edelmetall in einer Menge im Bereich von etwa 1 µg/cm² bis etwa 30 µg/cm² abgeschieden wird.

## Revendications

1. Procédé permettant, dans un réacteur nucléaire (10), de réduire l'absorption d'hydrogène dans des composants d'assemblage combustible (46) en alliages de zirconium, lequel procédé comporte le fait de déposer au moins un métal noble sur au moins une surface des composants d'assemblage combustible, à l'extérieur du réacteur nucléaire, laquelle opération de dépôt d'au moins un métal noble comprend le fait d'exposer les composants d'assemblage combustible en alliages de zirconium à l'action d'une solution aqueuse comprenant au moins un composé d'au moins un métal noble, **caractérisé en ce que** ce métal noble au nombre d'au moins un est choisi dans l'ensemble formé par les platine, palladium, osmium, ruthénium, iridium et rhodium et leurs mélanges, chaque métal noble se trouvant, dans la solution, en une proportion d'environ 5 ppb à environ 500 ppb (parties par milliard).

2. Procédé conforme à la revendication 1, dans lequel l'exposition des composants d'assemblage combustible (46) en alliages de zirconium à l'action d'une solution aqueuse comprend le fait d'exposer les composants d'assemblage combustible en alliages de zirconium à l'action de la solution aqueuse à une température d'environ 50 °C à environ 320 °C.

3. Procédé conforme à la revendication 1, dans lequel l'exposition des composants d'assemblage combustible (46) en alliages de zirconium à l'action d'une solution aqueuse comprend le fait d'exposer les composants d'assemblage combustible en alliages de zirconium à l'action de la solution aqueuse à une température d'environ 90 °C à environ 285 °C.

4. Procédé conforme à la revendication 1, dans lequel le composé au nombre d'au moins un est choisi dans l'ensemble formé par les suivants : acétyl-acétonate de palladium, nitrate de palladium, acétate de palladium, acétyl-acétonate de platine, acide hexahydroxoplatinique, composés de formules Na₂Pt(OH)₆, Pt(NH₃)₄(NO₃)₂, K₃Ir(NO₂)₆ et K₃Rh(NO₂)₆, oxyde de platine-IV, oxyde-hydrate de platine-IV, acétate de rhodium-II, nitrate de rhodium-III, oxyde de rhodium-III, oxyde-hydrate de rhodium-III, phosphate de rhodium-II et sulfate de rhodium-III, et leurs mélanges.

5. Procédé conforme à la revendication 1, dans lequel on dépose le métal noble en une quantité qui vaut d'environ 0,01 µg/cm² à environ 1000 µg/cm².

6. Procédé conforme à la revendication 1, dans lequel on dépose le métal noble en une quantité qui vaut d'environ 1 µg/cm² à environ 30 µg/cm².
